# EUROPÄISCHE PATENTSCHRIFT

(11) **EP 0 489 886 B1**
(45) Veröffentlichungstag und Bekanntmachung des Hinweises auf die Patenterteilung: **14.01.1998**
(21) Anmeldenummer: 91912094.9
(22) Anmeldetag: 22.06.1991
(51) Int. Cl.: B60Q 1/14, H01H 25/00

(54) **ELEKTRISCHER SCHALTER, INSBESONDERE LENKSTOCKSCHALTER FÜR KRAFTFAHRZEUGE**
ELECTRIC SWITCH, IN PARTICULAR A STEERING-COLUMN SWITCH FOR MOTOR VEHICLES
COMMUTATEUR ELECTRIQUE, NOTAMMENT COMMUTATEUR FIXE A LA COLONNE DE DIRECTION DE VEHICULES A MOTEUR

(30) Priorität: 29.06.1990 DE 4020844
(43) Veröffentlichungstag der Anmeldung: 17.06.1992
(73) Patentinhaber: ITT Automotive Europe GmbH, 60488 Frankfurt am Main (DE)
(72) Erfinder: MACHALITZKY, Otto, D-7120 Bietigheim-Bissingen (DE); VOGEL, Xaver, D-8861 Munningen (DE)
(86) Internationale Anmeldenummer: EP9101155
(87) Internationale Veröffentlichungsnummer: WO9200205

(56) Entgegenhaltungen:
- GB-A- 2 135 125
- GB-A- 2 135 126
- US-A- 4 221 941

## Beschreibung

Die Erfindung geht aus von einem elektrischen Schalter, der insbesondere als Lenkstockschalter für Kraftfahrzeuge verwendet wird und die Merkmale aus dem Oberbegriff des Anspruchs 1 aufweist. Ein derartiger Schalter ist aus der DE-A1 3 717 251 bekannt.

Bei einem solchen Schalter ist ein Betätigungshebel um mindestens eine Achse schwenkbar in einem Schaltergehäuse gelagert. Nach der Montage in einem Kraftfahrzeug werden durch ein Verschwenken des Betätigungshebels um diese Achse zum Beispiel die Blinkleuchten des Kraftfahrzeugs ein- und ausgeschaltet. Der Betätigungshebel weist einen Drehgriff auf, der um eine in Längsrichtung des Betätigungshebels verlaufende Drehachse drehbar und zwischen mindestens zwei Schaltstellungen bewegbar ist. Durch Verdrehen des Drehgriffs kann zum Beispiel das Standlicht und das Fahrlicht eines Kraftfahrzeugs eingeschaltet werden, wobei der Drehgriff dann drei stabile Schaltstellungen besitzt, nämlich eine Neutralstellung, in der Stand- und Fahrlicht ausgeschaltet sind, eine erste Arbeitsstellung, in der das Standlicht eingeschaltet ist, und eine zweite Arbeitsstellung, in der je nach den nationalen Vorschriften das Stand- und Fahrlicht oder nur das Fahrlicht eingeschaltet ist. Um über den Drehgriff zumindest einen innerhalb des Schaltergehäuses untergebrachten, bewegbaren elektrischen Kontakt steuern zu können, ist eine Schaltstange vorgesehen, die zumindest annähernd in Längsrichtung des Betätigungshebels ausgerichtet ist und über den Drehgriff im wesentlichen um ihre Längsachse verdrehbar ist.

Bei elektrischen Schaltern der beschriebenen Art wird üblicherweise von den Kraftfahrzeugherstellern vorgeschrieben, wie groß der Drehwinkel zwischen den verschiedenen Schaltstellungen des Drehgriffs sein soll. Zum Beispiel wird ein Drehwinkel von 30° vorgeschrieben. Der Drehwinkel des Drehgriffs wird dabei in erster Linie nach ergonomischen Gesichtspunkten ausgewählt, die Raumverhältnisse innerhalb des Schaltergehäuses oder die zum Betätigen der elektrischen Kontakte notwendigen Schaltwege werden nicht berücksichtigt.

Der Erfindung liegt die Aufgabe zugrunde, einen elektrischen Schalter mit den Merkmalen aus dem Oberbegriff des Anspruchs 1 so weiterzuentwickeln, daß der Aufbau innerhalb des Schaltergehäuses weitgehend unabhangig von dem für den Drehgriff vorgegebenen Drehwinkel gestaltet werden kann.

Diese Aufgabe wird erfindungsgemäß dadurch gelöst, daß bei einem elektrischen Schalter, der die Merkmale aus dem Oberbegriff des Anspruchs 1 aufweist, die Schaltstange bei einer Verdrehung des Drehgriffs um einen bestimmten Drehwinkel von einer Schaltstellung in eine benachbarte Schaltstellung um einen Drehwinkel verdrehbar ist, der von dem Drehwinkel des Drehgriffs verschieden ist. Somit ist bei einem erfindungsgemäßen elektrischen Schalter von einer Kupplung zwischen dem Drehgriff und der Schaltstange dergestalt abgegangen, daß der Drehgriff und die Schaltstange jeweils um den gleichen Winkel verdreht werden. Der Drehwinkel der Schaltstange ist vielmehr unabhängig vom Drehwinkel des Drehgriffs wählbar und kann auf die räumlichen und elektrischen Gegebenheiten innerhalb des Schaltergehäuses abgestimmt werden.

Vorteilhafte Ausgestaltungen eines erfindungsgemäßen elektrischen Schalters kann man den Unteransprüchen entnehmen.

Steht im Schaltergehäuse nur wenig Platz zur Verfügung, so ist der Drehwinkel der Schaltstange bevorzugt kleiner als der Drehwinkel des Drehgriffs.

Wenn der elektrische Kontakt nur während eines Teils der Verdrehung des Drehgriffs zwischen zwei benachbarten Schaltstellungen über die Schaltstange bewegbar ist, hat er eine größere Geschwindigkeit im Vergleich zu einer Lösung, bei der er während der gesamten Verdrehung des Drehgriffs zwischen zwei benachbarten Schaltstellungen bewegbar ist. Diese größere Geschwindigkeit kann für die elektrische Kontaktgabe vorteilhaft sein. Im anderen Fall erscheint ein gleichmäßigeres Schaltgefühl möglich.

Wie schon erwähnt, besitzt der Drehgriff drei stabile Schaltstellungen, wenn er zum Einschalten des Stand- und des Fahrlichts eines Kraftfahrzeugs verwendet wird. Auch für andere Verwendungszwecke kann eine ungerade Anzahl von Schaltstellungen des Drehgriffs notwendig sein. Bei einer solchen ungeraden Anzahl von Schaltstellungen des Drehgriffs wird eine Ausführung bevorzugt, bei der die Bewegung der Schaltstange bei einer Verdrehung des Drehgriffs aus der mittleren Schaltstellung heraus in die eine Richtung symmetrisch zu einer Bewegung bei einer Verdrehung des Drehgriffs aus der mittleren Schaltstellung heraus in die andere Richtung ist. Auf diese Weise ändern sich die Schaltverhältnisse innerhalb des Drehbereichs des Drehgriffs nicht so stark.

Die Bewegung der Schaltstange und ihr Einfluß auf den bewegbaren elektrischen Kontakt sind leicht zu überblicken, wenn die Bewegung der Schaltstange während der Verdrehung des Drehgriffs zwischen zwei Schaltstellungen eine reine Drehbewegung um eine in Längsrichtung des Betätigungshebels verlaufende Drehachse ist. Die Drehachse der reinen Drehbewegung der Schaltstange fällt dann vorzugsweise mit der Drehachse des Drehgriffs zusammen.

Eine Konstruktion mit weniger Teilen ist möglich, wenn sich die Bewegung der Schaltstange während der Verdrehung des Drehgriffs zwischen zwei Schaltstellungen aus einer Drehbewegung um eine Längsachse und aus einer seitlichen Ausschwenkung des dem Drehgriff nahen ersten Endes der Schaltstange vorzugsweise um das zweite Ende der Schaltstange zusamnensetzt. Das zweite Ende der Schaltstange wird dann zweckmäßigerweise allseitig schwenkbar gelagert. Die kombinierte Bewegung des dem Drehgriff nahen ersten Endes der Schaltstange läßt zu, den Drehgriff und die Schaltstange unmittelbar miteinander zu koppeln.

Die Ansprüche 13 bis 15 beziehen sich auf eine Ausführung, bei der der Drehgriff mit der Schaltstange über mindestens ein Federelement gekoppelt ist.

Denkbar ist dabei eine Ausführung, bei der an der Schaltstange zwei Federelemente mit jeweils einem Ende anliegen, von denen das eine Federelement mit dem anderen Ende am Drehgriff anliegt und die Schaltstange in die eine Richtung zu verdrehen sucht und das andere Federelement an einem unverdrehbaren Teil des Schalthebels anliegt und die Schaltstange in die andere Richtung zu verdrehen sucht. Dabei kann bezüglich einer mittleren Schaltstellung eine Symmetrie dergestalt vorgesehen sein, daß die beiden Federelemente in der mittleren Schaltstellung des Drehgriffs mit dem jeweils anderen Ende sowohl am Drehgriff als auch an einem unverdrehbaren Teil des Betätigungshebels anliegen. Bei einer solchen Ausführung wird die Schaltstange während der gesamten Drehbewegung des Drehgriffs mitbewegt.

Um auch bei einer Schwergängigkeit der Schaltstange deren Verdrehen sicherzustellen, erscheint es jedoch günstiger, wenn das mindestens eine Federelement in einer ersten Schaltstellung entspannt zwischen dem Drehgriff und der Schaltstange angeordnet ist und bei einer Verdrehung des Drehgriffs in eine der ersten Schaltstellung benachbarte zweite Schaltstellung zunächst die Schaltstange über das mindestens eine Federelement bis zu einem Anschlag verdrehbar ist und anschließend das Federelement stärker spannbar ist. Bei normaler Gängigkeit der Schaltstange wird also zunächst die Schaltstange verdreht und dann das Federelement stärker gespannt. Ist dagegen die Schaltstange so schwergängig, daß die Kraft des Federelements nicht ausreicht, sie zu verdrehen, so wird zunächst das Federelement stärker gespannt, bis schließlich die Federkraft ausreicht, die Schaltstange zu verdrehen oder die Schaltstange direkt mitgenommen wird.

Ein Federelement zwischen dem Drehgriff und der Schaltstange läßt, sofern man nicht zusätzliche Maßnahmen ergreift, die Schaltkräfte in die entgegengesetzten Richtungen unterschiedlich werden. Sofern man mehrere stabile Schaltstellungen des Drehgriffs braucht, muß die Rückstellkraft des Federelements durch eine vergrößerte Rastkraft zwischen einem durch eine Verdrehung des Drehgriffs bewegbaren und einem während der Verdrehung des Drehgriffs stillstehenden Teil des elektrischen Schalters kompensiert werden. Es ist deshalb mit stärkerem Verschleiß zu rechnen, sofern man nicht hochwertige, und damit teure Materialien verwenden will.

Deshalb sind bei einer weiteren erfindungsgemäßen Ausführung eines elektrischen Schalters der Drehgriff und die Schaltstange über ein Exzenterstück miteinander gekoppelt, das unabhängig vom Drehgriff und von der Schaltstange mit einer von der Drehachse des Drehgriffs beabstandeten Drehachse am Betätigungshebel gelagert ist. Bevorzugt liegen in einer Schaltstellung des Drehgriffs, insbesondere in einer mittleren Schaltstellung, die beiden Eingriffstellen einerseits zwischen dem Drehgriff und dem Exzenterstück und andererseits zwischen dem Exzenterstück und der Schaltstange in einer durch die Drehachsen des Drehgriffs und des Exzenterstücks aufgespannten Ebene. Auch die Drehachse der Schaltstange liegt in der genannten Schaltstellung des Drehgriffs bevorzugt in der genannten Ebene bzw. fällt mit der Drehachse des Drehgriffs zusammen. Man erhält dann symmetrische Bewegungsabläufe für eine Verdrehung des Drehgriffs aus der genannten Schaltstellung heraus nach entgegengesetzten Richtungen.

Eine dritte Ausführung eines erfindungsgemäßen elektrischen Schalters ist im Anspruch 19 angegeben. Bei dieser Ausführung ist dafür gesorgt, daß, ausgehend von einer bestimmten Schaltstellung des Drehgriffs und der Schaltstange diese während einer Verdrehung des Drehgriffs zunächst um eine Längsachse verdreht wird, weil in einem bestimmten Winkelbereich eine Drehlagerung für die Schaltstange vorhanden ist. Außerhalb des Winkelbereichs, der dem gewünschen Drehwinkel der Schaltstange entspricht, wird die Schaltstange von der Drehlagerung frei und während der weiteren Verdrehung des Drehgriffs zur Seite geschwenkt.

Weil ein Haken beim Zurückdrehen der Schaltstange sicher vermieden wird, wird jedoch eine andere Ausführung mit ebenfalls einer direkten Koppelung zwischen dem Drehgriff und der Schaltstange besonders bevorzugt. Bei dieser Ausführung ist zumindest das dem Drehgriff nahe erste Ende der Schaltstange drehbar um eine Drehachse verschwenkbar, die einen Abstand von der Drehachse des Drehgriffs besitzt und es ist die Schaltstange vom Drehgriff mitnehmbar und um die Drehachse des ersten Endes verdrehbar.

Um eine Drehbewegung des Drehgriffs in eine Bewegung des bewegbaren elektrischen Kontakts umzusetzen, werden mehrere Bauteile verwendet, deren Maße mit Toleranzen behaftet sind und deren Koppelungen untereinander Spiel haben können, so daß ein im Schaltergehäuse beweglich gelagertes Schaltstück, das über die Schaltstange verstellbar ist, und über das der elektrische Kontakt bewegbar ist, in wenigstens einer Schaltstellung mit Hilfe einer Rastkurve und eines Rastkurvenfolgers mit dem Schaltergehäuse verrastet ist. Die Rastkurve und der Rastkurvenfolger sorgen dafür, daß wenigstens die eine Schaltstellung des Schaltstücks und damit des elektrischen Kontakts genau definiert ist.

Zur Betätigung des elektrischen Kontakts weist die Schaltstange an ihrem dem Drehgriff entfernten Ende vorzugsweise einen seitlichen Finger auf. Dabei wird im allgemeinen die Richtung, in der der elektrische Kontakt betätigt wird, nicht in einer senkrecht auf der Längsachse der Schaltstange stehenden Ebene liegen. Insbesondere bei Lenkstockschaltern ist dies der Fall, bei denen die Längsrichtung des Schalthebels und die Längsrichtung der Lenksäule im allgemeinen einen Winkel ungleich 90° einschließen, der elektrische Kontakt dagegen zum Beispiel parallel zur Lenksäule bewegbar ist. Um nun den Finger beim Verdrehen der Schaltstange wenigstens annähernd in der Betätigungsebene zu halten, ist gemäß Anspruch 25 vorgesehen, daß der Finger an einer bestimmten Stelle in einer Richtung geführt ist, die mit der Längsrichtung des Betätigungshebels einen Winkel ungleich 90° einschließt. Nach Anspruch 26 ist die Schaltstange in ihrer Längsrichtung verschiebbar. Die Ansprüche 27 bis 29 bilden den elektrischen Schalter nach Anspruch 25 bzw. 26 in vorteilhafter Weise weiter. Es soll dabei darauf hingewiesen werden, daß die Ausgestaltungen nach den Ansprüchen 25 bis 29 auch dann mit Vorteil angewandt werden können, wenn während einer Verdrehung des Drehgriffs von einer Schaltstellung in eine benachbarte Schaltstellung der Drehgriff und die Schaltstange im gleichen Winkel verdreht werden.

Mehrere Ausführungsbeispiele eines erfindungsgemäßen elektrischen Schalters sind in den Zeichnungen dargestellt. Anhand der Figuren dieser Zeichnungen wird die Erfindung nun näher erläutert.

Es zeigen:
- Figur 1: eine Sicht in einen offenen elektrischen Schalter mit einem durch Drehen von Teilen eines Betätigungshebels um die Längsachse geradlinig bewegbaren Schieber,
- Figur 2: einen Längsschnitt durch eine erste Ausführung eines Betätigungshebels zur Verwendung an einem elektrischen Schalter nach Figur 1,
- Figur 3: einen Schnitt entlang der Linie III-III aus Figur 2,
- Figur 4: eine Prinzipskizze zur Verdeutlichung des Winkels der Längsachse des Betätigungshebels und einer Schwenkachse des Betätigungshebels,
- Figur 5: eine zweite Ausführung eines Betätigungshebels im Längsschnitt,
- Figur 6: einen Schnitt entlang der VI-VI aus Figur 5,
- Figur 7: einen Schnitt entlang der Linie VII-VII aus Figur 5,
- Figur 8: eine dritte Ausführung eines Betätigungshebels im Längsschnitt,
- Figur 9: einen Schnitt entlang der Linie IX-IX aus Figur 8,
- Figur 10: einen Längsschnitt durch ein viertes Ausführungsbeispiel eines Betätigungshebels und
- Figur 11: einen Schnitt entlang der Linie XI-XI aus Figur 10, wobei jedoch der Übersicht halber zwei Teile weggelassen sind.

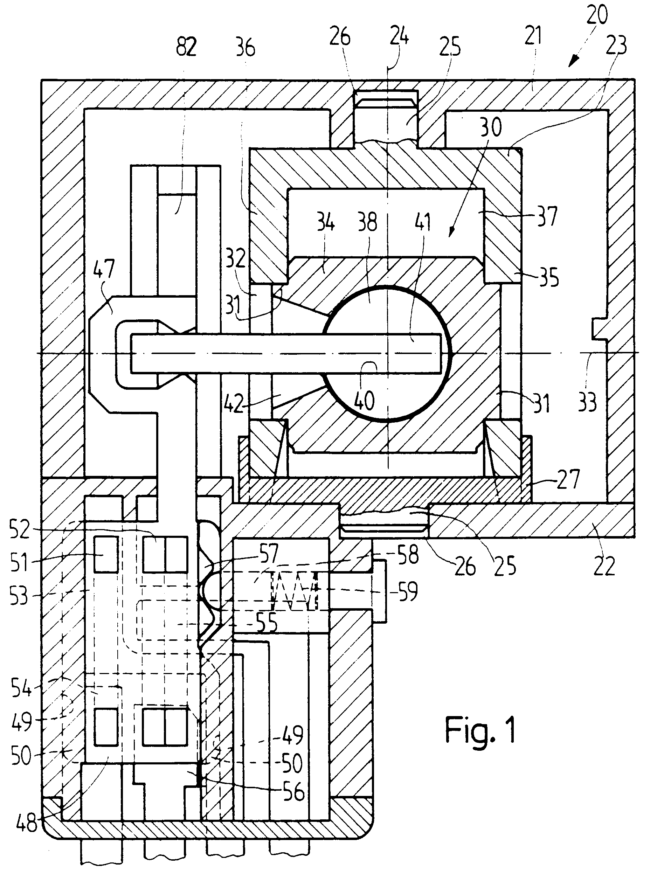

In dem sich aus einem Oberteil 21 und einem Unterteil 22 zusammensetzenden Gehäuse 20 des in Figur 1 gezeigten elektrischen Schalters ist ein Mitnehmer 23 so gelagert, daß er um eine Schwenkachse 24, die als vertikal bezeichnet werden möge, verschwenkt werden kann. Der Mitnehmer 23 besitzt dazu zwei Lagerzapfen 25, deren Mittelachsen miteinander fluchten und die in Bohrungen 26 des Oberteils 21 bzw. des Unterteils 22 eintauchen. An dem Mitnehmer 23 ist in nicht näher dargestellter, jedoch allgemein bekannter Weise eine Kontaktbrücke eingehängt, über die die Blinkleuchten eines Kraftfahrzeugs eingeschaltet werden können, wenn der elektrische Schalter in der vorgesehenen Weise an das Bordnetz eines Kraftfahrzeugs angeschlossen ist.

Ein Betätigungshebel 30 ist mit Hilfe zweier Lagerzapfen 31 und zweier Lagerbohrungen 32 im Mitnehmer 23, in die die Lagerzapfen 31 eintauchen, so am Mitnehmer gelagert, daß er in seiner Gesamtheit um eine senkrecht durch die Schwenkachse 24 gehende Schwenkachse 33, die als horizontal bezeichnet werden möge, gegenüber dem Mitnehmer 23 verschwenkbar ist. Die Lagerzapfen 31 befinden sich an einer Basis 34 des Betätigungshebels und werden bei der Montage in Richtung der Schwenkachse 24 unter Aufweitung der Seitenwände 35 und 36 des rahmenförmigen Mitnehmers 23 in die Lagerbohrungen 32 geschoben. Anschließend wird die Aufnahme 37 für den Betätigungshebel 30 im Mitnehmer 23 durch einen Deckel 27, an dem sich auch der eine Lagerzapfen 25 des Mitnehmers 23 befindet. verschlossen. Durch Verschwenken des Betätigungshebels 30 um die horizontale Schwenkachse 33 kann in nicht näher dargestellter, jedoch allgemein bekannter Weise zwischen dem Fernlicht und dem Abblendlicht eines Kraftfahrzeugs umgeschaltet werden, wenn der elektrische Schalter in der vorgesehenen Art an das Bordnetz eines Kraftfahrzeugs angeschlossen ist.

Die Basis 34 des Betätigungshebels 30 ist als Hohlkörper ausgebildet, durch den sich in Form eines Rohres, das an seinem sich im Gehäuse 20 befindlichen Ende verschlossen ist, eine Schaltstange 38 erstreckt. Die Materialanhäufung am geschlossenen Ende 39 der Schaltstange 38 befindet sich etwa in der durch die beiden Schwenkachsen 24 und 33 aufgespannten Ebene. Das Ende 39 ist mit einer Querbohrung 40 versehen, deren Achse in der von den beiden Schwenkachsen 24 und 33 aufgespannten Ebene liegt und in die ein Betätigungsfinger 41 eingepreßt ist. Dieser ragt durch einen Längsschlitz 42 in einem Lagerzapfen 31 der Basis 34 des Betätigungshebels 30 und durch eine Bohrung 32 des Mitnehmers 23 zur Seite hin vor und greift dort in eine U-förmige Führung 47 eines Schaltschiebers 48 ein. Dieser ist mit Hilfe zweier sich parallel zur Schwenkachse 24 erstreckender Nuten 49 im Unterteil 22 des Gehäuses 20 und zweier in die Nuten 49 eingreifender Leisten 50 so im Gehäuse 20 geführt, daß er parallel zur Schwenkachse 24 bewegt werden kann. An ihm sind zwei Kontaktbrücken 51 und 52 aufgehängt, von denen die Kontaktbrücke 51 mit zwei Festkontakten 53 und 54, und die Kontaktbrücke 52 mit zwei Festkontakten 55 und 56 zusammenwirkt.

Der Schaltschieber 48 kann drei verschiedene Schaltstellungen einnehmen, wobei er in Figur 1 in einer mittleren Schaltstellung gezeigt ist. Man sieht, daß in dieser Schaltstellung des Schaltschiebers 48 die Achse des Betätigungsfingers 41 mit der horizontalen Schwenkachse 33 zusammenfällt.

Damit die Schaltstellungen des Schaltschiebers 48 genau eingehalten werden, ist an der einen Leiste 50 des Schaltschiebers 48 eine Rastkurve 57 ausgebildet, in die ein im Unterteil 22 des Gehäuses geführter Rastbolzen 58 unter dem Druck einer Schraubenfeder 59 eingreift. Ist der elektrische Schalter nach Figur 1 in der richtigen Weise an das Bordnetz eines Kraftfahrzeugs angeschlossen, so kann über die Kontaktbrücke 51 das Standlicht und über die Kontaktbrücke 52 des Fahrlicht des Kraftfahrzeugs eingeschaltet werden, wobei, ausgehend von einer neutralen Schaltstellung, in einer benachbarten Schaltstellung zunächst das Standlicht und in einer weiteren Schaltstellung zusätzlich zum Standlicht das Fahrlicht eingeschaltet ist.

Die Platzverhältnisse in dem Gehäuse 20 lassen nur bestimmte Schaltwege des Schaltschiebers 48 zu, die bestimmten Drehwinkeln des Betätigungsfingers 41 bzw. der Schaltstange 38 entsprechen. Diese Drehwinkel der Schaltstange 38 sind kleiner als der für einen Drehgriff 60 des Betätigungshebels 30 gewünschte Drehwinkel zwischen zwei Schaltstellungen. Deshalb ist in den Betätigungshebel 30 eine Mechanik eingebaut, über die die Drehwinkel des Drehgriffs 60 auf kleinere Drehwinkel der Schaltstange 38 heruntergesetzt werden.

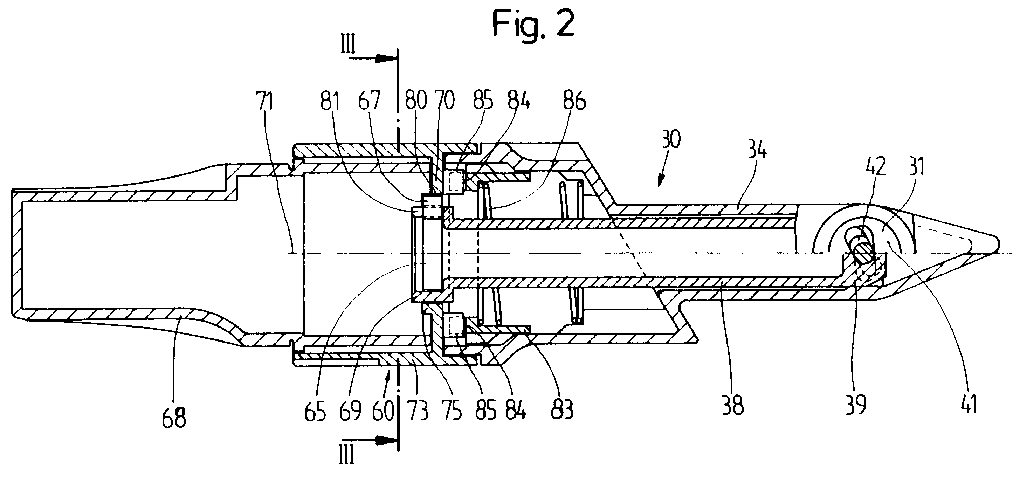

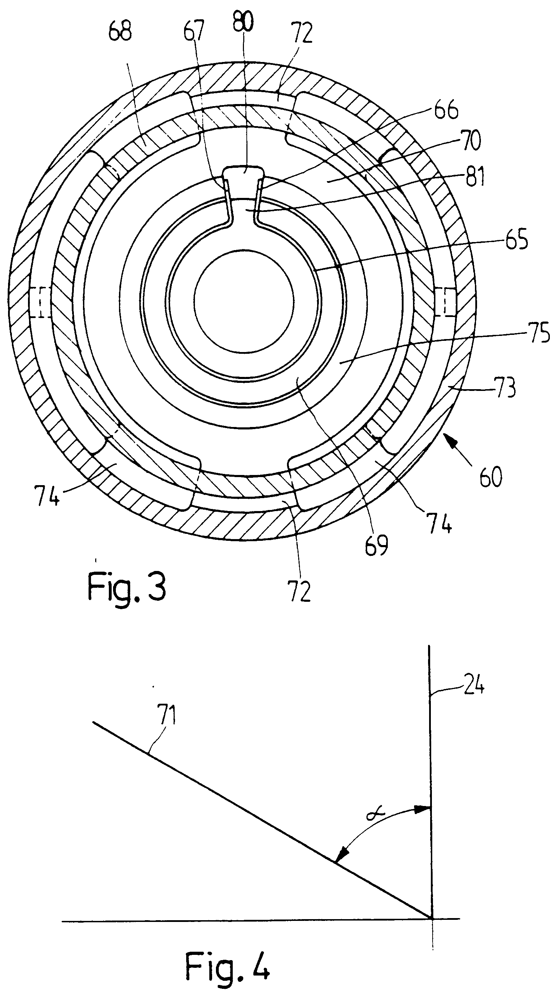

Bei der Ausführung nach den Figuren 2 und 3 geschieht dies mit Hilfe einer ringförmigen Blattfeder 65, deren Enden 66 und 67 radial nach außen gebogen sind. Der Drehgriff 60 ist außen auf der Basis 34 und einem Schwenkgriff 68, der an der Basis 34 des Betätigungshebels 30 befestigt ist, drehbar gelagert. Die Schaltstange 38 ist an ihrem geschlossenen Ende 39 in der Basis 34 und ihrem anderen Ende 69 an einem Innenflansch 70 des Drehgriffs 60 drehbar um eine Längsachse gelagert. Diese Längsachse fluchtet mit der Drehachse 71 des Drehgriffs 60. Wie man deutlich aus Figur 3 ersieht, ist der Innenflansch 70 nur an zwei, in Umfangsrichtung schmalen und sich einander gegenüberliegenden Abschnitten 72 mit dem Außenring 73 des Drehgriffs 60 verbunden, so daß zwei ringsegmentartige Aussparungen 74 entstanden sind. Durch diese hindurch ist der Schwenkgriff 68 mit der Basis 34 des Betätigungshebels 30 verbunden.

Der Innenflansch 70 des Drehgriffs 60 ist innen mit einem Bund 75 versehen, so daß eine gewisse Lagerlänge für die Schaltstange 38 entstanden ist. In dem gegenüber dem sonstigen Durchmesser der Schaltstange 38 vergrößerten Ende 69 der Schaltstange 38 befindet sich ebenso wie im Bund 75 des Drehgriffs 60 eine radiale Lücke 80 bzw. 81, wobei sich die beiden Lücken 80 und 81 über denselben Winkel erstrecken. Die Blattfeder 65 liegt innen im Ende 69 der Schaltstange 38 und greift mit ihren beiden Enden 66 und 67 in die Lücken 80 und 81 hinein.

Entsprechend dem Schaltschieber 48 kann auch der Drehgriff 60 drei Schaltstellungen einnehmen. In der in Figur 3 gezeigten mittleren Schaltstellung liegt sowohl das Ende 66 als auch das Ende 67 der Blattfeder 65 sowohl am Bunde 75 des Drehgriffs 60 als auch an der Schaltstange 38 an. Wird nun, ausgehend von der mittleren Schaltstellung nach Figur 3, der Drehgriff 60 im Uhrzeigersinn gedreht, so nimmt er zunächst über die Enden 67 und 66 der Blattfeder 65 die Schaltstange 38 mit, bis der Schaltschieber 48 in einem Abschnitt 82 gegen das Gehäuseoberteil 21 stößt. Die Schaltstange 38 kann nun nicht mehr weitergedreht werden. Beim weiteren Verdrehen des Drehgriffs 60 kann lediglich noch das Ende 67 der Blattfeder 65 mitgenommen werden, bis es gegen das Ende 67 stößt. Die Blattfeder 65 ist nun stärker vorgespannt und versucht, den Drehgriff 60 wieder zurückzudrehen. Dies wird verhindert durch eine Rasteinrichtung, die aus einem verdrehsicher, jedoch axial bewegbar an der Basis 34 gehaltenen Rastring 83 mit zwei identischen Rastkurven 84, zwei in die Rastkurven 84 eingreifende Rastnocken 85 am Drehgriff 60 und einer Schraubendruckfeder 86 besteht, die sich an der Basis 34 und am Rastring 83 abstützt und den Rastring 83 gegen die Rastnocken 85 drückt.

Beim Zurückdrehen des Drehgriffs in die mittlere Schaltstellung entspannt sich zunächst nur die Blattfeder 65, ohne daß die Schaltstange 38 mitgenommen wird. Erst wenn das Ende 67 der Blattfeder 65 gegen die Schaltstange 38 stößt, wird diese mitgedreht. Ausgehend von der mittleren Schaltstellung nach Figur 3 erfolgt der Bewegungsablauf beim Verdrehen des Drehgriffs 60 entgegen dem Uhrzeigersinn in analoger Weise.

Geht man von einer seitlichen Schaltstellung aus und bewegt den Drehgriff 60 über die mittlere Schaltstellung in die andere seitliche Schaltstellung, so wird zunächst die Feder entspannt, dann die Schaltstange über die mittlere Schaltstellung hinaus mitgenommen und schließlich die Blattfeder 65 wieder gespannt. Kennzeichnend für die Ausführung nach den Figuren 2 und 3 ist also, daß die Schaltstange 38 jeweils nur in einem bestimmten Drehwinkelbereich des Drehgriffs 60 von diesem mitgenommen wird.

Aus Figur 2 ist noch ersichtlich, daß die Längsrichtung des Schlitzes 42 in einem Lagerzapfen 31 der Basis 34 des Betätigungshebels 30 mit der Längsrichtung der Schaltstange 38 und des gesamten Betätigungshebels 30 einen Winkel ungleich 90°, nämlich einen Winkel von 60° einschließt. Dieser Winkel entspricht dem Winkel α, nach Figur 4, der von der vertikalen Schwenkachse 24 und der Längsrichtung des Betätigungshebels 30, die mit der Richtung der Drehachse 71 des Drehgriffs 60 übereinstimmt, eingeschlossen wird, wenn der Betätigungshebel 30 bezüglich der horizontalen Schwenkachse 33 seine Ruhelage einnimmt. Die genaue Führung des Betätigungsfingers 41 im Schlitz 42 geschieht unmittelbar an der Oberfläche der Schaltstange 38, während sich der Schlitz nach außen hin so erweitert, daß die Schrägstellung des Betätigungsfingers bezüglich der durch die beiden Schwenkachsen 24 und 33 aufgespannten Ebene in den beiden seitlichen Schaltstellungen der Schaltstange 8 möglich ist. Unmittelbar an der Oberseite der Schaltstange 38 dagegen verbleibt der Betätigungsfinger 41 in der besagten Ebene. Damit dies möglich ist, ist die Schaltstange 38 in Längsrichtung verschiebbar. Der Bund 75 gewährleistet den Eingriff der Blattfeder 65 in die Lücke 80 in jeder Position der Schaltstange 38.

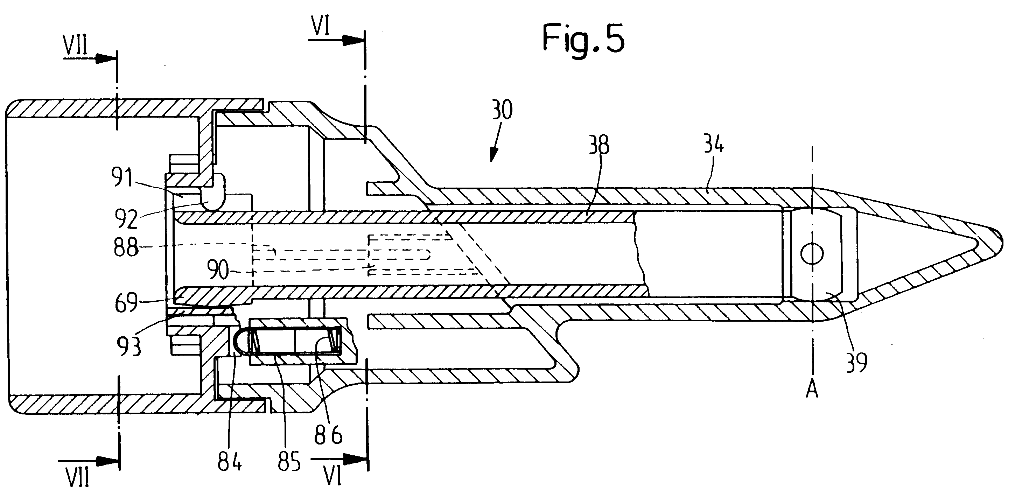

Der Betätigungshebel 30 nach den Figuren 5 bis 7 weist wiederum eine Basis 34, einen Drehgriff 60 und eine Schaltstange 38 auf. In das geschlossene Ende 39 des Schaltstange ist, wie bei der Ausführung nach den Figuren 2 und 3, der Betätigungsfinger 41 gesteckt. Das Ende 39 ist außen kugelig gestaltet, so daß die Schaltstange 38 an diesem Ende 39 allseitig bewegbar an der Basis 34 gelagert ist. Im Abstand zu dem Ende 39 sind außen an die Schaltstange 38 zwei Rippen 87 bzw. 88 angeformt, die sich einander diametral gegenüberliegen und deren Außenseite zylindrisch gekrümmt ist mit der Längsachse der Schaltstange 38 als Zylinderachse. Die Basis 34 weist zwei Lagerflächen 89 und 90 auf. Die Anordnung der Lagerflächen 89 und 90 bezüglich der Rippen 87 und 88 ist so gewählt, daß sich die Rippen in der mittleren Schaltstellung des Drehgriffs 60 näher an der einen in Richtung der Drehachse des Drehgriffs 60 verlaufenden Seitenkante der Lagerflächen befinden als an der anderen Seitenkante und daß sich die Lagerflächen von den Rippen aus in entgegengesetzte Umfangsrichtungen erstrecken.

Am Ende 69 der Schaltstange 38 ist außen eine Vertiefung 91 geschaffen, in die der Drehgriff 60 mit einem Vorsprung 92 eingreift. Dem Vorsprung 92 gegenüberliegend ist einstückig mit dem Drehgriff 60 ein federnder Abschnitt 93 ausgebildet, der gegen die Schaltstange 38 drückt und den Nocken 92 in der Vertiefung 91 hält. Vertiefung 91 und Vorsprung 92 sind so geformt, daß die Schaltstange 38 um den Vorsprung 92 verschwenkt werden kann.

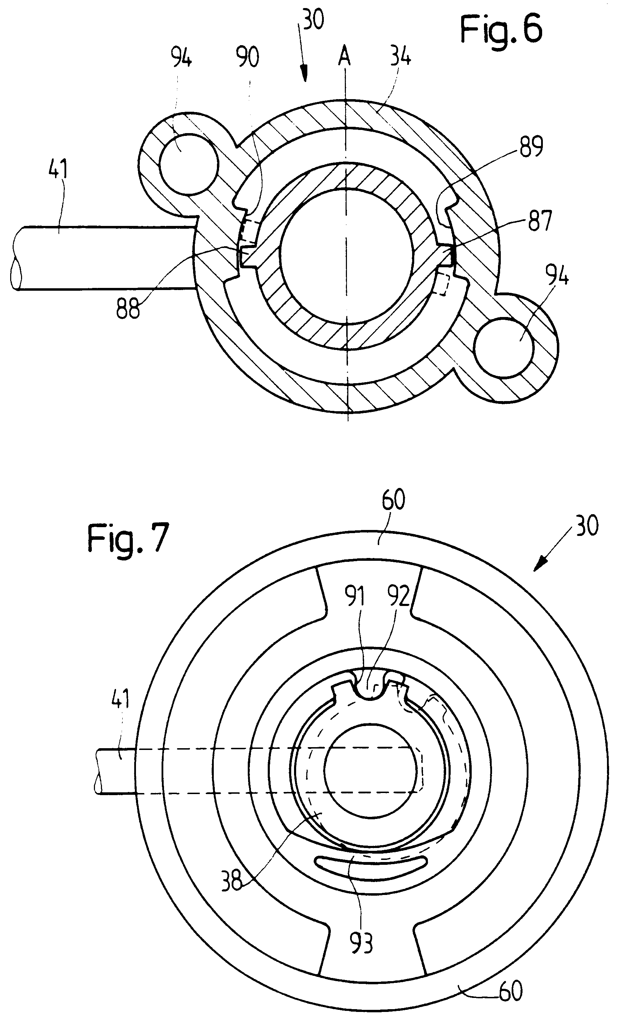

Es sei nun von der in den Figuren gezeigten mittleren Schaltstellung des Drehgriffs 60 und der Schaltstange 38 ausgegangen. Wird nun der Drehgriff 60, betrachtet nach den Figuren 6 und 7, im Uhrzeigersinn verdreht, so ist die Schaltstange 38 zunächst über die Rippen 87 und 88 und die Lagerflächen 89 und 90 um ihre Längsachse verdrehbar, bis die Rippe 87 aus dem Bereich der Lägerfläche 89 herausgewandert ist. Der Schaltschieber 48 hat dann eine Endlage erreicht und ein weiteres Verdrehen der Schaltstange 38 ist nicht möglich. Der Drehgriff 60 läßt sich jedoch bis in eine seiner drei stabilen Schaltstellungen weiterdrehen, wobei dann die Schaltstange 38 um ihr Ende 39 zur Seite geschwenkt wird. Dies ist möglich, weil sich die Rippe 87 außerhalb der Lagerfläche 89 befindet. Die erreichte Position der Schaltstange ist in Figur 7 gestrichelt eingezeichnet. Die drei Schaltstellungen sind wie bei der Ausführung nach den Figuren 2 und 3 wiederum durch eine Rasteinrichtung bestimmt. Es befindet sich nun die Rastkurve 84 am Drehgriff 60, während ein Rastnocken 85 und eine diesen Rastnocken belastende Schraubenfeder 86 in einer Sackbohrung 94 der Basis 34 des Betätigungshebels 30 geführt sind. In Figur 5 sind der übersicht halber nur eine Rastkurve, ein Rastnocken und eine Schraubendruckfeder gezeigt. Man ersieht jedoch aus Figur 6, die zwei Sackbohrungen 94 erkennen läßt, daß zwei gleichwirkende Rasteinrichtungen vorhanden sind, damit der Drehgriff 60 nicht verkantet.

Bei der Ausführung nach den Figuren 5 bis 7 wird, ähnlich wie bei der Ausführung nach den Figuren 2 und 3, der Schaltschieber 48 jeweils nur in einem bestimmten Drehwinkelbereich des Drehgriffs 60 mitgenommen, während er in einem anderen Drehwinkelbereich stillsteht und die Verdrehung des Drehgriffs 60 in anderer Weise ausgeglichen wird.

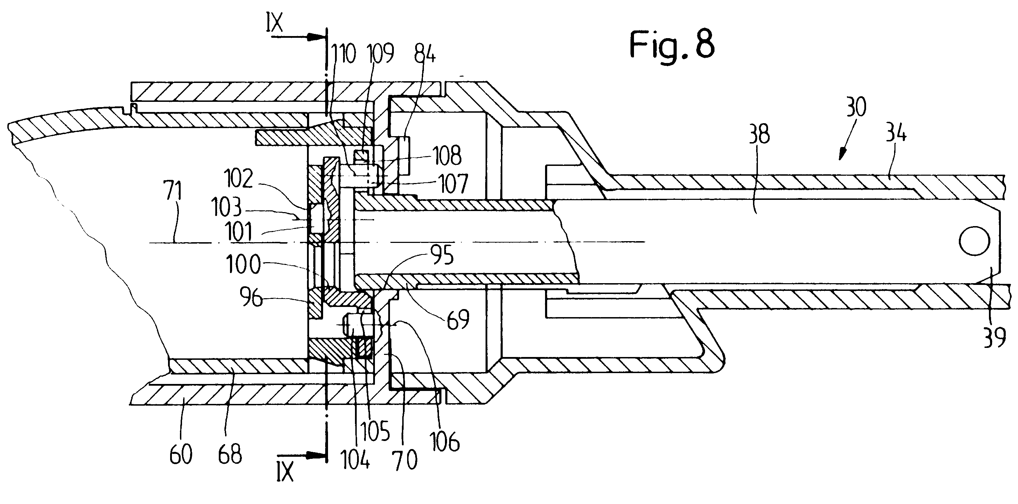

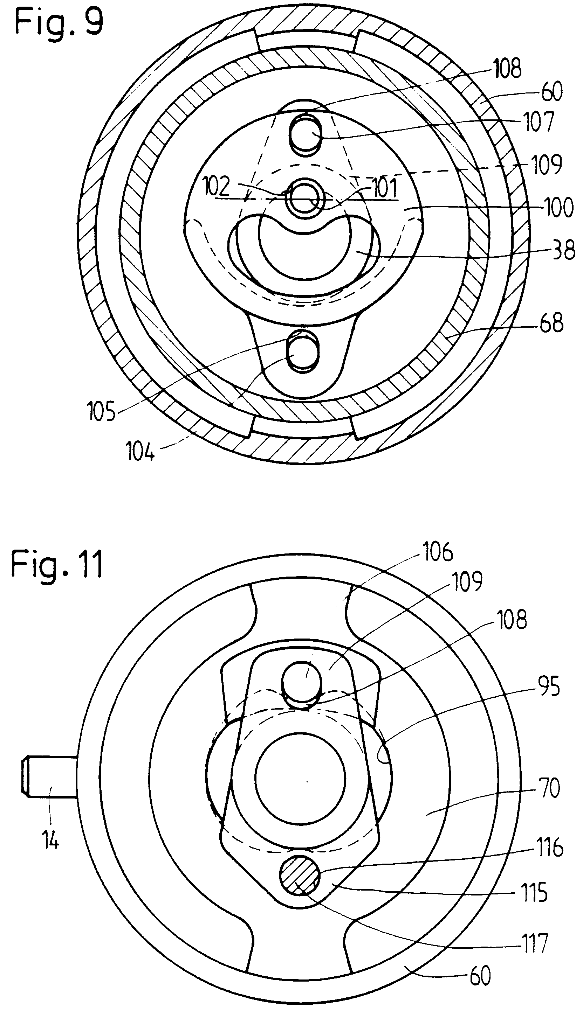

Das ist anders bei der im folgenden beschriebenen dritten Ausführung nach den Figuren 8 und 9. Bei dieser wird nämlich die Schaltstange 38 während der gesamten Drehbewegung des Drehgriffs 60 in einer Weise verdreht, daß sich der Schaltschieber während der gesamten Drehbewegung des Drehgriffs mitbewegt. Es wird lediglich der Drehwinkel des Drehgriffs 60 auf einen kleineren Drehwinkel der Schaltstange 38 untersetzt.

Die Schaltstange 38 ist an ihrem Ende 39 in der Basis 34 des Betätigungshebels 30 und an ihrem anderen Ende 69 in einer zentralen zylindrischen Öffnung im Innenflansch 70 des Drehgriffs 60 drehbar gelagert. Die Drehachse der Schaltstange 38 stimmt mit der Drehachse 71 des Drehgriffs 60 überein. Anders als bei der Ausführung nach den Figuren 2 und 3 ist nun der Schwenkgriff 68 innerhalb des Drehgriffs 60 mit einem Boden 96 versehen, der in den Schwenkgriff eingerastet ist. Zwischen dem Innenflansch 70 des Drehgriffs 60 und dem Boden 96 des Schwenkgriffs 68 ist ein Exzenterstück 100 angeordnet, das mit einem Zapfen 101 in einer Lagerbohrung 102 des Bodens 96 drehbar gelagert ist. Die Drehachse 103 hat dabei einen Abstand von der Drehachse 71 des Drehgriffs 60. Der Drehgriff 60 greift mit einem an seinen Innenflansch 70 angeformten Zapfen 104 in eine Öffnung 105 des Exzenterstücks 100 hinein, wobei diese Öffnung in radialer Richtung zur Drehachse 103 des Exzenterstücks 100 länger als der Zapfen ist, während sie in Umfangsrichtung dem Durchmesser des Zapfens entspricht. Der Abstand der Mittelachse 106 des Zapfens 104 von der Drehachse 71 des Drehgriffs 60 ist wesentlich größer als der Abstand der Drehachse 103 des Exzenterstücks 100 von der Drehachse 71. Außerdem liegt die Mittelachse 106 in der mittleren Schaltstellung des Drehgriffs 60 in der durch die beiden Achsen 71 und 103 aufgespannten Ebene und bezüglich der Drehachse 71 des Drehgriffs 60 der Drehachse 103 gegenüber. An das Exzenterstück 100 ist neben dem Zapfen 101 ein weiterer Zapfen 107 angeformt, der in die entgegengesetzte Richtung zeigt und in eine Öffnung 108 in einem Außenflansch 109 am Ende 69 der Schaltstange 38 hineinragt. Die Öffnung 108 ist in der gleichen Weise länglich gestaltet wie die Öffnung 105. Die Zapfen 104 und 107 liegen sich bezüglich der Drehachse des Zapfens 101 gegenüber, so daß sich in der mittleren Schaltstellung des Drehgriffs 60 auch die Mittelachse 110 des Zapfens 107 in der durch die Drehachsen 71 und 103 aufgespannten Ebene befindet. Der Abstand des Zapfens 107 von der Drehachse 71 des Drehgriffs 60 und der Schaltstange 38 ist größer als der Abstand des Zapfens 103 von der Drehachse 71.

Der Drehgriff 60 befinde sich in der mittleren Schaltstellung. Die Zapfen 101, 104 und 107 nehmen die in Figur 9 gezeigen Positionen ein. Wird nun der Drehgriff, nach Figur 9 betrachtet, im Uhrzeigersinn gedreht, so wird über den Zapfen 104 das Exzenterstück 100 mitgenommen und im Uhrzeigersinn um die Drehachse 103 gedreht. Der Drehwinkel des Exzenterstücks 100 um die Drehachse 103 ist dabei kleiner als der Drehwinkel des Drehgriffs 60 um die Achse 71, da der Abstand zwischen der Achse 103 und dem Zapfen 104 größer ist als der Abstand des Zapfens 104 von der Drehachse 71. Über den Zapfen 107 nimmt das Exzenterstück 100 die Schaltstange 38 mit, so daß diese im Uhrzeigersinn um die Achse 71 verdreht wird. Da der Abstand zwischen dem Zapfen 107 und der Drehachse 103 kleiner ist als der Abstand des Zapfens 107 von der Drehachse 71, ist der Drehwinkel der Schaltstange 38 um die Drehachse 71 kleiner als der Drehwinkel des Exzenterstücks 100 um die Drehachse 103. Insgesamt wird somit der Drehwinkel des Drehgriffs 60 auf einen kleineren Drehwinkel der Schaltstange 38 untersetzt.

Verdreht man den Drehgriff, ausgehend von den Positionen nach Figur 9, entgegengesetzt dem Uhrzeigersinn, so laufen die Bewegungen spiegelbildlich ab. Man hat somit eine Bewegungssymmetrie bezüglich der mittleren Schaltstellung des Drehgriffs 60.

Auch bei der Ausführung nach den Figuren 8 und 9 wird neben einer Rasteinrichtung zwischen dem Schaltschieber 48 und dem Gehäuse 20 vorteilhafterweise auch zwischen dem Drehgriff 60 und der Basis 34 des Betätigungshebels 30 eine Rastvorrichtung vorgesehen. In Figur 8 ist eine Rastkurve 84 am Drehgriff 60 gezeigt. Die anderen Teile der Rastvorrichtung sind weggelassen, da sie entsprechend der Ausführung nach den Figuren 5 bis 7 ausgebildet sein können.

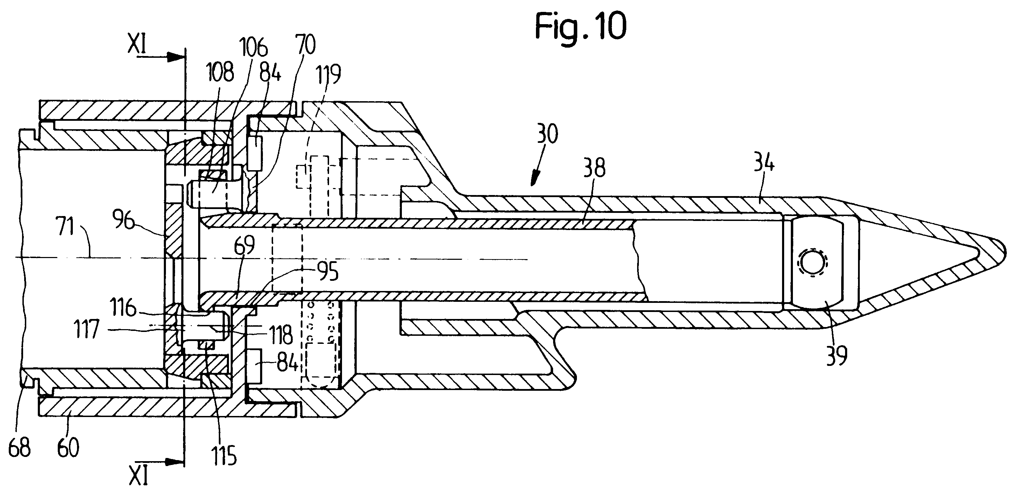

Bei der Ausführung nach den Figuren 8 und 9 wird die Schaltstange 38 während der gesamten Bewegung des Drehgriffs 60 um dieselbe Achse wie der Drehgriff mitgedreht, wobei sich während der gesamten Drehung des Drehgriffs 60 der Schaltschieber 48 bewegt. Auch bei der Ausführung nach den Figuren 10 und 11 bewegt sich der Schaltschieber 48 während der gesamten Drehung des Drehgriffs 60. Die Bewegung der Schaltstange 38 dagegen setzt sich aus einer Drehbewegung um die Längsachse der Schaltstange 38 und aus einer seitlichen Schwenkbewegung des Endes 69 zusammen. Das Ende 39 der Schaltstange 38 ist deshalb wieder außen kugelig gestaltet.

Das Ende 69 besitzt außen herum einen Flansch 109, mit einer Öffnung 108, in die nun jedoch direkt der Drehgriff 60 mit dem Zapfen 106 eingreift. In einem zweiten Außenflansch am Ende 60 besitzt die Schaltstange 38 eine Lagerbohrung 116, in die ein an den Boden 96 des Schwenkgriffs 68 angeformter Lagerzapfen 117 eingreift.

In der Mittelstellung des Drehgriffs 60 liegen sich die beiden Zapfen 106 und 117 bezüglich der Drehachse 71 des Drehgriffs 60, die in der mittleren Schaltstellung des Drehgriffs mit der Mittelachse der Schaltstange 38 zusammenfällt, diametral gegenüber. Sie haben also den gleichen Abstand von der Drehachse 71.

Der Drehgriff 60 und die Schaltstange 38 mögen sich nun in der mittleren Schaltstellung nach Figur 11 befinden. Wird nun der Drehgriff, nach dieser Figur betrachtet, im Uhrzeigersinn verdreht, so nimmt der Zapfen 106 die Schaltstange 38 mit und verschwenkt das Ende 69 dieser Schaltstange um die Mittelachse 118 des Zapfens 117. Die Längsachse der Schaltstange 38 wird dadurch gegenüber der Drehachse 71 verkippt und schneidet diese Drehachse im Mittelpunkt der kugeligen Außenfläche des ersten Endes 39 der Schaltstange 38. Die Bewegung der Schaltstange 38 kann man sich somit aus einer Drehbewegung um die Längsachse der Schaltstange und aus einer Schwenkbewegung um eine senkrecht zur Längsachse durch den Mittelpunkt der kugeligen Außenfläche des Endes 39 gehenden Achse zusammengesetzt denken. Die Drehbewegung verursacht das Verschwenken des Betätigungsfingers 41 im Sinne einer Verstellung des Schaltschiebers 48.

Entsprechend der Bewegung des Endes 69 der Schaltstange 38 wird nun die zentrale Öffnung 95 im Innenflansch 70 des Drehgriffs 60 so gestaltet, daß sie die Bewegung des Endes 69 nicht behindert. Die Form ist aus Figur 11 ersichtlich.

Auch in Figur 10 ist eine Rastkurve 84 am Drehgriff 60 angedeutet, um zu zeigen, daß zwischen dem Drehgriff 60 und der Basis 34 des Betätigungshebels 30 eine Rastvorrichtung wirkt.

Anstelle am Boden 96 des Schwenkgriffs 68 könnte ein Lagerzapfen für die Schaltstange 38 auch an die Basis 34 angeformt sein. Dies ist in Figur 10 mit gestrichelten Linien angedeutet. Der Zapfen ist mit der Bezugszahl 119 versehen. Anstelle des Drehgriffs 60 könnte auch die Schaltstange 38 mit der Basis 34 verrastet sein, wobei an der Schaltstange 38 eine bezüglich des Zapfens 119 radiale Führung für einen Rastbolzen und eine Druckfeder angeformt werden könnte, und die Basis 34 eine Rastkurve aufweisen würde.

Es sei noch darauf hingewiesen, daß bei einer Ausführung nach den Figuren 10 und 11 auch die Öffnung 116 länglich wie die Öffnung 108 und die Öffnung 108 kreisrund wie die Öffnung 116 ausgebildet sein könnten.

Natürlich ist auch bei den Ausführungen nach den Figuren 5 bis 7, den Figuren 8 und 9 und nach den Figuren 10 und 11 dafür gesorgt, daß sich die Schaltstange 38 in Längsrichtung bewegen und dadurch die Führung des Betätigungsfingers 41 entsprechend der Ausführung nach den Figuren 2 und 3 erlaubt.

## Patentansprüche

1. Elektrischer Schalter, insbesondere Lenkstockschalter für Kraftfahrzeuge, mit einem Schaltergehäuse (20) und mit einem Betätigungshebel (30), der um mindestens eine Achse (24) schwenkbar und um seine Längsachse undrehbar im Schaltergehäuse (20) gelagert ist und der einen manuell betätigbaren, außerhalb des Gehäuses angeordneten Drehgriff (60) aufweist, der um eine in Längsrichtung des Betätigungshebels (30) verlaufende Drehachse (71) drehbar und zwischen mindestens zwei Schaltstellungen, bewegbar ist, und der eine Schaltstange (38) aufweist, die zumindest annähernd in Längsrichtung des Betätigungshebels (30) ausgerichtet ist, durch den Drehgriff (60) im wesentlichen um ihre Längsachse verdrehbar ist und über die zumindest ein innerhalb des Schaltergehäuses (20) untergebrachter, elektrischer Kontakt (51,52) bewegbar ist, dadurch **gekennzeichnet,** daß die Schaltstange (38) bei einer Verdrehung des Drehgriffs (60) um einen bestimmten Drehwinkel von einer Schaltstellung in eine benachbarte Schaltstellung um einen Drehwinkel verdrehbar ist, der von dem Drehwinkel des Drehgriffs (60) verschieden ist.

2. Elektrischer Schalter nach Anspruch 1, dadurch gekennzeichnet, daß der Drehwinkel der Schaltstange (38) kleiner ist als der Drehwinkel des Drehgriffs (60).

3. Elektrischer Schalter nach Anspruch 1 oder 2, dadurch gekennzeichnet, daß der mindestens eine elektrische Kontakt (51, 52) nur während eines Teils der Verdrehung des Drehgriffs (60) zwischen zwei benachbarten Schaltstellungen über die Schaltstange (38) bewegbar ist.

4. Elektrischer Schalter nach Anspruch 1 oder 2, dadurch gekennzeichnet, daß der mindestens eine elektrische Kontakt (51, 52) während der gesamten Verdrehung des Drehgriffs (60) zwischen zwei benachbarten Schaltstellungen über die Schaltstange (38) bewegbar ist.

5. Elektrischer Schalter nach Anspruch 3 oder 4, dadurch gekennzeichnet, daß die Bewegung der Schaltstange (38) bei einer Verdrehung des Drehgriffs (60) aus einer mittleren Schaltstellung heraus in die eine Richtung symmetrisch zu einer Bewegung bei einer Verdrehung des Drehgriffs (60) aus der mittleren Schaltstellung heraus in die andere Richtung ist.

6. Elektrischer Schalter nach Anspruch 5, dadurch gekennzeichnet, daß in der mittleren Schaltstellung des Drehgriffs (60) eine Mittelachse der Schaltstange (38) mit der Drehachse (71) des Drehgriffs (60) fluchtet.

7. Elektrischer Schalter nach einem vorhergehenden Anspruch, dadurch gekennzeichnet, daß die Bewegung der Schaltstange (38) während der Verdrehung des Drehgriffs (60) zwischen zwei Schaltstellungen eine reine Drehbewegung um eine in Längsrichtung des Betätigungshebels (30) verlaufende Drehachse (71) ist.

8. Elektrischer Schalter nach Anspruch 7, dadurch gekennzeichnet, daß die Drehachse (71) der reinen Drehbewegung der Schaltstange (38) mit der Drehachse (71) des Drehgriffs (60) zusammenfällt.

9. Elektrischer Schalter nach einem der Ansprüche 1 bis 6, dadurch gekennzeichnet, daß sich die Bewegung der Schaltstange (38) während der Verdrehung des Drehgriffs (60) zwischen zwei Schaltstellungen aus einer Drehbewegung um eine Längsachse und aus einer seitlichen Ausschwenkung des dem Drehgriff (60) nahen ersten Endes (69) der Schaltstange (38) vorzugsweise um das zweite Ende (39) der Schaltstange (38) zusammensetzt.

10. Elektrischer Schalter nach Anspruch 9, dadurch gekennzeichnet, daß das zweite Ende (39) der Schaltstange (38) vorzugsweise im Betätigungshebel (30) allseitig schwenkbar gelagert ist.

11. Elektrischer Schalter nach Anspruch 10, dadurch gekennzeichnet, daß das zweite Ende (39) der Schaltstange (38) mit einer kugeligen Außenfläche versehen ist.

12. Elektrischer Schalter nach einem der Ansprüche 1 bis 11, dadurch gekennzeichnet, daß der Drehgriff (60) und die Schaltstange (38) unmittelbar miteinander gekoppelt sind.

13. Elektrischer Schalter nach einem der Ansprüche 1 bis 11, dadurch gekennzeichnet, daß der Drehgriff (60) mit der Schaltstange (38) über mindestens ein Federelement (65) gekoppelt ist.

14. Elektrischer Schalter nach Anspruch 13, dadurch gekennzeichnet, daß das mindestens eine Federelement (65) in einer ersten Schaltstellung entspannt zwischen dem Drehgriff (60) und der Schaltstange (38) angeordnet ist und daß bei einer Verdrehung des Drehgriffs (60) in eine der ersten Schaltstellung benachbarte zweite Schaltstellung zunächst die Schaltstange (38) über das mindestens eine Federelement (65) bis zu einem Anschlag (21, 22) verdrehbar ist und anschließend das Federelement (65) stärker spannbar ist.

15. Elektrischer Schalter nach Anspruch 14,dadurch gekennzeichnet, daß der Drehgriff (60) und die Schaltstange (38) drei Schaltstellungen aufweisen und daß das einzige Federelement (65) in der mittleren Schaltstellung beidendig sowohl am Drehgriff (60) als auch an der Schaltstellung (38) anliegt.

16. Elektrischer Schalter nach einem der Ansprüche 1 bis 11, dadurch gekennzeichnet, daß der Drehgriff (60) und die Schaltstange (38) über ein Exzenterstück (100) miteinander gekoppelt sind, das unabhängig vom Drehgriff (60) und von der Schaltstange (38) mit einer von der Drehachse (60) des Drehgriffs (60) beabstandeten Drehachse (103) am Betätigungshebel (30) gelagert ist, daß der Abstand zwischen der Drehachse (103) des Exzenterstücks (100) und der Eingriffstelle des Drehgriffs (60) am Exzenterstück (100) anders, insbesondere größer, ist als der Abstand zwischen der Drehachse (71) des Drehgriffs (60) und der Eingriffstelle zwischen Drehgriff (60) und Exzenterstück (100) und daß der Abstand zwischen der Drehachse (103) des Exzenterstücks (100) und der Eingriffstelle zwischen Exzenterstück (100) und Schaltstange (38) anders, insbesondere kleiner, ist als der Abstand zwischen der Drehachse (71) der Schaltstange (38) und der Eingriffstelle zwischen Schaltstange (38) und Exzenterstück (100).

17. Elektrischer Schalter nach Anspruch 16, dadurch gekennzeichnet, daß sich die beiden Eingriffstellen bezüglich der Drehachse (103) des Exzenterstücks (100) gegenüberliegen.

18. Elektrischer Schalter nach Anspruch 17, dadurch gekennzeichnet, daß in einer Schaltstellung des Drehgriffs (60), insbesondere in einer mittleren Schaltstellung, die beiden Eingriffstellen in einer durch die Drehachsen (71, 103) des Drehgriffs (60) und des Exzenterstücks (100) aufgespannten Ebene liegen.

19. Elektrischer Schalter nach Anspruch 12, dadurch gekennzeichnet, daß die Schaltstange (38) und der Betätigungshebel (30) Lagerflächen (87, 88; 89, 90) für eine Drehung der Schaltstange (38) um eine Längsachse (71) aufweisen, wobei die Lagerflächen (87, 88; 89, 90) nur während eines Teils der Drehbewegung des Drehgriffs (60) von einer Schaltstellung in eine benachbarte einander gegenüberliegen, und daß in dem anderen Teil der Drehbewegung des Drehgriffs (60) das mit dem Drehgriff (60) ineinandergreifende Ende (69) der Schaltstange (38) seitlich ausschwenkbar ist.

20. Elektrischer Schalter nach Anspruch 12, dadurch gekennzeichnet, daß zumindest das dem Drehgriff (60) nahe erste Ende (69) der Schaltstange (38) drehbar um eine Drehachse (118) verschwenkbar ist, die einen Abstand von der Drehachse (71) des Drehgriffs (60) besitzt, und daß die Schaltstange (38) vom Drehgriff (60) mitnehmbar und um die Drehachse (118) des ersten Endes (69) verdrehbar ist.

21. Elektrischer Schalter nach Anspruch 20, dadurch gekennzeichnet, daß sich die Drehachse (118) des ersten Endes (69) der Schaltstange (38) und die Koppelungsstelle zwischen dem Drehgriff (60) und der Schaltstange (38) bezüglich einer Mittelachse der Schaltstange (38) gegenüberliegen.

22. Elektrischer Schalter nach Anspruch 20 oder 21, dadurch gekennzeichnet, daß die Schaltstange (38) der Drehachse (118) des ersten Endes (69) gegenüberliegend eine Aufnahme für einen Rastkurvenfolger und eine den Rastkurvenfolger gegen eine Rastkurve am Betätigungshebel drückende Feder aufweist, wobei der Rastkurvenfolger in der Aufnahme vorzugsweise radial zur Drehachse des dem Drehgriff nahen Endes der Schaltstange geführt ist.

23. Elektrischer Schalter nach einem vorhergehenden Anspruch, dadurch gekennzeichnet, daß der Drehgriff (60) in wenigstens einer Schaltstellung mit Hilfe einer Rastkurve (84) und eines Rastkurvenfolgers (85) mit einem unverdrehbaren Teil (34) des Betätigungshebels (30) verrastet ist.

24. Elektrischer Schalter nach einem vorhergehenden Anspruch, dadurch gekennzeichnet, daß über die Schaltstange (38) ein im Schaltergehäuse (20) beweglich gelagertes Schaltstück (48) verstellbar ist, über das der elektrische Kontakt (51, 52) bewegbar ist, und daß das Schaltstück (48) in wenigstens einer Schaltstellung mit Hilfe einer Rastkurve (57) und eines Rastkurvenfolgers (58) mit dem Schaltergehäuse (20) verrastet ist.

25. Elektrischer Schalter, insbesondere nach einem vorhergehenden Anspruch, dadurch gekennzeichnet, daß die Schaltstange (38) an ihrem dem Drehgriff (60) entfernten Ende (39) einen seitlichen Finger (41) aufweist, über den der elektrische Kontakt (51, 52) bewegbar ist, daß der Finger (41) an einer bestimmten Stelle in einer Richtung geführt ist, die mit der Längsrichtung des Betätigungshebels (30) einen Winkel ungleich 90° einschließt.

26. Elektrischer Schalter nach Anspruch 25, dadurch gekennzeichnet, daß die Schaltstange (38) in ihrer Längsrichtung verschiebbar ist.

27. Elektrischer Schalter nach Anspruch 25 oder 26, dadurch gekennzeichnet, daß der Finger (41) unmittelbar oberhalb der Außenfläche der Schaltstange (38) geführt ist.

28. Elektrischer Schalter nach Anspruch 25, 26 oder 27, dadurch gekennzeichnet, daß der Finger (41) in einem unverdrehbaren Teil (34) des Betätigungshebels (30) geführt ist.

29. Elektrischer Schalter nach Anspruch 25, 26, 27 oder 28, dadurch gekennzeichnet, daß der Betätigungshebel (30) zusammen mit einem Mitnehmer (23) um eine erste Achse (24) schwenkbar im Schaltergehäuse (20) gelagert ist, daß der Betätigungshebel (30) um eine zweite, vorzugsweise die erste Achse (24) senkrecht schneidende Achse (33) schwenkbar am Mitnehmer (23) gelagert ist und daß der Finger (41) in wenigstens einer Schaltstellung des Drehgriffs (60) vorzugsweise in einer mittleren Schaltstellung, in Richtung der zweiten Achse (33) ausgerichtet ist.

## Claims

1. Electric switch, especially a steering column switch for motor vehicles, comprising a switch housing (20) and an operating lever (30) which is mounted in the switch housing (20) to be swivelled about at least one axis (24) and is unrotatable about its longitudinal axis, and which has a manually operable control grip (60) arranged outside the housing which is rotatable about an axis of rotation (71) that extends in the longitudinal direction of the operating lever (30) and is movable between at least two operating positions, and which includes a switching rod (38) that is aligned at least substantially in the longitudinal direction of the operating lever (30), is rotatable by way of the control grip (60) substantially about its longitudinal axis, and by which at least one electric contact (51, 52) accommodated within the switch housing (20) is movable,
**characterized** in that upon rotation of the control grip (60) about a defined angle of rotation, the switching rod (38) may be turned from one operating position to an adjacent operating position about an angle of rotation differing from the angle of rotation of the control grip (60).

2. An electric switch as claimed in claim 1,
**characterized** in that the angle of rotation of the switching rod (38) is smaller than the angle of rotation of the control grip (60).

3. An electric switch as claimed in claim 1 or 2,
**characterized** in that at least one electric contact (51, 52) is movable by the switching rod (38) only during part of the twisting motion of the control grip (60) between two adjacent operating positions.

4. An electric switch as claimed in claim 1 or 2,
**characterized** in that at least one electric contact (51,52) is movable by way of the switching rod (38) between two adjacent operating positions during the entire twisting motion of the control grip (60).

5. An electric switch as claimed in claim 3 or 4,
**characterized** in that the movement of the switching rod (38) during a twisting motion of the control grip (60) out of a central operating position in one direction is symmetrical to a movement in a twisting motion of the control grip (60) out of the central operating position into the other direction.

6. An electric switch as claimed in claim 5,
**characterized** in that in the central operating position of the control grip (60) a center line of the switching rod (38) is flush with the axis of rotation (71) of the control grip (60).

7. An electric switch as claimed in one of the preceding claims,
**characterized** in that the movement of the switching rod (38) during the twisting motion of the control grip (60) between two operating positions is a pure rotation about an axis of rotation (71) extending in the longitudinal direction of the operating lever (30).

8. An electric switch as claimed in claim 7,
**characterized** in that the axis of rotation (71) of the pure rotation of the switching rod (38) coincides with the axis of rotation (71) of the control grip (60).

9. An electric switch as claimed in any one of claims 1 to 6,
**characterized** in that, during a twisting motion of the control grip (60) between two operating positions, the movement of the switching rod (38) includes a rotation about a longitudinal axis and a lateral deflection of the end (69) of the switching rod (38) facing the control grip (60) preferably about the second end (39) of the switching rod (38).

10. An electric switch as claimed in claim 9,
**characterized** in that the second end (39) of the switching rod (38) is preferably mounted in the operating lever (30) to be swivellable to all sides.

11. An electric switch as claimed in claim 10,
**characterized** in that the second end (39) of the switching rod (38) is provided with a ball-shaped outer surface.

12. An electric switch as claimed in one of claims 1 to 11,
**characterized** in that the control grip (60) and the switching rod (38) are directly coupled with each other.

13. An electric switch as claimed in one of claims 1 to 11,
**characterized** in that the control grip (60) is coupled with the switching rod (38) by way of at least one spring element (65).

14. An electric switch as claimed in claim 13,
**characterized** in that at least one spring element (65) in a first operating position is arranged in a relaxed condition between the control grip (60) and the switching rod (38), and in that in a twisting motion of the control grip (60) into a second operating position adjacent to the first operating position, initially, the switching rod (38) is rotatable by way of at least one spring element (65) until a stop (21, 22) and, subsequently, the spring element (65) may be tensioned more heavily.

15. An electric switch as claimed in claim 14,
**characterized** in that the control grip (60) and the switching rod (38) have three operating positions, and in that in the central operating position the only spring element (65) rests with either end both on the control grip (60) and the switching rod (38).

16. An electric switch as claimed in any one of claims 1 to 11,
**characterized** in that the control grip (60) and the switching rod (38) are coupled with each other by way of an eccentric piece (100) mounted on the operating lever (30) independently of the control grip (60) and the switching rod (38) with an axis of rotation (103) spaced from the axis of rotation (61) of the control grip (60), in that the spacing between the axis of rotation (103) of the eccentric piece (100) and the point of action of the control grip (60) on the eccentric piece (100) is different from, in particular larger than, the spacing between the axis of rotation (71) of the control grip (60) and the point of action between the control grip (60) and the eccentric piece (100), and in that the spacing between the axis of rotation (103) of the eccentric piece (100) and the point of action between the eccentric piece (100) and the switching rod (38) is different from, in particular smaller than, the spacing between the axis of rotation (71) of the switching rod (38) and the point of action between the switching rod (38) and the eccentric piece (100).

17. An electric switch as claimed in claim 16,
**characterized** in that the two points of action are located opposite each other relative to the axis of rotation (103) of the eccentric piece (100).

18. An electric switch as claimed in claim 17,
**characterized** in that in an operating position of the control grip (60), especially in a central operating position, the two points of action are located in a plane defined by the two axes of rotation (71,103) of the control grip (60) and of the eccentric piece (100).

19. An electric switch as claimed in claim 12,
**characterized** in that the switching rod (38) and the operating lever (30) have bearing surfaces (87,88; 89,90) for a rotation of the switching rod (38) about a longitudinal axis (71), and the bearing surfaces (87,88; 89,90) are only opposite to each other during part of the rotation of the control grip (60) from one operating position into an adjacent one, and in that during the other part of the rotation of the control grip (60) the end (69) of the switching rod (38) engaged with the control grip (60) is laterally deflectable.

20. An electric switch as claimed in claim 12,
**characterized** in that at least the first end (69) of the switching rod (38) facing the control grip (60) is swivellable about an axis of rotation (118) being spaced from the axis of rotation (71) of the control grip (60), and in that the switching rod (38) may be taken along by the control grip (60) and turned about the axis of rotation (118) of the first end (69).

21. An electric switch as claimed in claim 20,
**characterized** in that the axis of rotation (118) of the first end (69) of the switching rod (38) and the coupling point between the control grip (60) and the switching rod (38) are positioned opposite to each other relative to a center line of the switching rod (38).

22. An electric switch as claimed in claim 20 or 21,
**characterized** in that the switching rod (38), opposite to the axis of rotation (118) of the first end (69), has a recess for a locking curve follower and a spring pressing the locking curve follower against a locking curve on the operating lever, and the locking curve follower is guided in the recess, preferably radially to the axis of rotation of the end of the switching rod facing the control grip.

23. An electric switch as claimed in one of the preceding claims,
**characterized** in that in at least one operating position the control grip (60) is locked with a non-rotatable part (34) of the operating lever (30) by means of a locking curve (84) and a locking curve follower (85).

24. An electric switch as claimed in one of the preceding claims,
**characterized** in that a switching piece (48) movably mounted in the switch housing (20) is adjustable by way of the switching rod (38), the electric contact (51, 52) being movable by way of the switching piece, and in that in at least one operating position the switching piece (48) is locked with the switch housing (20) by means of a locking curve (57) and a locking curve follower (58).

25. An electric switch, especially as claimed in one of the preceding claims,
**characterized** in that the switching rod (38) has a lateral finger (41) on its end (39) remote from the control grip (60), by way of which finger the electric contact (51, 52) is movable, in that in a particular place the finger (41) is guided in a direction including an angle not equal to 90 degrees with the longitudinal direction of the operating lever (30).

26. An electric switch as claimed in claim 25,
**characterized** in that the switching rod (38) is displaceable in its longitudinal direction.

27. An electric switch as claimed in claim 25 or 26,
**characterized** in that the finger (41) is guided directly above the outer surface of the switching rod (38).

28. An electric switch as claimed in claim 25, 26 or 27,
**characterized** in that the finger (41) is guided in a non-rotatable part (34) of the operating lever (30).

29. An electric switch as claimed in claim 25, 26, 27 or 28,
**characterized** in that the operating lever (30) together with a carrier (23) is mounted in the switch housing (20) to be swivelled about a first axis (24), in that the operating lever (30) is mounted on the carrier (23) so as to be swivellable about a second axis (33) preferably vertically intersecting the first axis (24), and in that the finger (41) is aligned in the direction of the second axis (33) in at least one operating position of the control grip (60), preferably in a central operating position.

## Revendications

1. Commutateur électrique, notamment commutateur de colonne de direction pour véhicules automobiles, comportant un boîtier (20) et un levier d'actionnement (30), qui est monté dans le boîtier (20) du commutateur de manière à pouvoir pivoter autour d'au moins un axe (24), sans pouvoir pivoter autour de son axe longitudinal, et qui comporte une poignée tournante (60) pouvant être actionnée manuellement et disposée à l'extérieur du boîtier, cette poignée pouvant tourner autour d'un axe de rotation (71) qui s'étend dans la direction longitudinale du levier d'actionnement (30) et être déplacée entre au moins deux positions de commutation, le levier comportant une tige de commutation (38) qui est dirigée au moins approximativement dans la direction longitudinale du levier d'actionnement (30), peut être entraînée en rotation essentiellement autour de son axe longitudinal au moyen de la poignée tournante (60) et à l'aide de laquelle peut être déplacé au moins un contact électrique (51,52) qui est logé à l'intérieur du boîtier (20) du commutateur, caractérisé en ce que lors d'une rotation de la poignée tournante (60) sur un angle de rotation déterminé, la tige de commutation (38) peut pivoter depuis une position de commutation dans une position de commutation voisine sur un angle de rotation qui est différent de l'angle de rotation de la poignée (60).

2. Commutateur électrique selon la revendication 1, caractérisé en ce que l'angle de rotation de la tige de commutation (38) est inférieur à l'angle de rotation de la poignée tournante (60).

3. Commutateur électrique selon la revendication 1 ou 2, caractérisé en ce que le au moins un contact électrique (51,52) peut être déplacé, uniquement pendant une partie de la rotation de la poignée tournante (60), entre deux positions de commutation voisines par l'intermédiaire de la tige de commutation (38).

4. Commutateur électrique selon la revendication 1 ou 2, caractérisé en ce que le au moins un contact électrique (51,52) est déplaçable pendant l'ensemble de la rotation de la poignée tournante (60) entre deux positions de commutation voisines, par l'intermédiaire de la tige de commutation (38).

5. Commutateur électrique selon la revendication 3 ou 4, caractérisé en ce que le déplacement de la tige de commutation (38) lors d'une rotation de la poignée tournante (60) depuis une position médiane de commutation dans une direction est symétrique d'un déplacement lors d'une rotation de la poignée tournante (60) depuis la position médiane de commutation dans l'autre direction.

6. Commutateur électrique selon la revendication 5, caractérisé en ce que lorsque la poignée tournante (60) est dans la position médiane de commutation, un axe médian de la tige de commutation (38) est aligné avec l'axe de rotation (71) de la poignée tournante (60).

7. Commutateur électrique selon l'une des revendications précédentes, caractérisé en ce que le déplacement de la tige de commutation (38) pendant la rotation de la poignée (60) entre deux positions de commutation est un pur déplacement de rotation autour d'un axe de rotation (71) qui s'étend dans la direction longitudinale du levier d'actionnement (30).

8. Commutateur électrique selon la revendication 7, caractérisé en ce que l'axe de rotation (71) du pur mouvement de rotation de la tige de commutation (38) coïncide avec l'axe de rotation (71) de la poignée tournante (60).

9. Commutateur électrique selon l'une des revendications 1 à 6, caractérisé en ce que le déplacement de la tige de commutation (38) pendant la rotation de la poignée tournante (60), entre deux positions de rotation se compose d'un mouvement de rotation autour d'un axe longitudinal et d'un basculement latéral de la première extrémité (69), proche de la poignée tournante (60) de la tige de commutation (38), de préférence autour de la seconde extrémité (39) de la tige de commutation (38).

10. Commutateur électrique selon la revendication 9, caractérisé en ce que la seconde extrémité (39) de la tige de commutation (38) est montée de manière à pouvoir basculer de préférence dans le levier d'actionnement (30) de tous côtés.

11. Commutateur électrique selon la revendication 10, caractérisé en ce que la seconde extrémité (39) de la tige de commutation (38) est pourvue d'une surface extérieure sphérique.

12. Commutateur électrique selon l'une des revendications 1 à 11, caractérisé en ce que la poignée tournante (60) et la tige de commutation (38) sont accouplées directement entre elles.

13. Commutateur électrique selon l'une des revendications 1 à 11, caractérisé en ce que la poignée tournante (60) est accouplée à la tige de commutation (38) par l'intermédiaire d'au moins un élément de ressort (65).

14. Commutateur électrique selon la revendication 13, caractérisé en ce que, dans une première position de commutation, le au moins un élément de ressort (65) est détendu entre la poignée tournante (60) et la tige de commutation (38), et que, lors d'une rotation de la poignée tournante (60) venant dans une seconde position de commutation voisine de la première position de commutation, tout d'abord la tige de commutation (38) peut tourner par l'intermédiaire du au moins un élément de ressort (65) jusqu'a une butée (21,22) et ensuite l'élément de ressort (65) est bandé plus fortement.

15. Commutateur électrique selon la revendication 14, caractérisé en ce que la poignée tournante (60) et la tige de commutation (38) possèdent trois positions de commutation et que dans la position médiane de commutation, l'élément unique de ressort (65) s'applique par ses deux extrémités aussi bien contre la poignée tournante (60) que contre la tige de commutation (38).

16. Commutateur électrique selon l'une des revendications 1 à 11, caractérisé en ce que la poignée tournante (60) et la tige de commutation (38) sont accouplées entre elles par l'intermédiaire d'un élément excentrique (100), qui, indépendamment de la poignée tournante (60) et de la tige de commutation (38), est monté sur le levier d'actionnement (30), avec un axe de rotation (103) distant de l'axe de rotation (60) de la poignée tournante (60), que la distance entre l'axe de rotation (103) de l'élément excentrique (100) et le point d'accrochage de la poignée tournante (60) sur l'élément excentrique (100) est différente et notamment supérieure à la distance entre l'axe de rotation (71) de la poignée tournante (60) et le point d'accrochage entre la poignée tournante (60) et l'élément excentrique (100), et que la distance entre l'axe de rotation (103) de l'élément excentrique (100) et le point d'accrochage entre l'élément excentrique (100) et la tige de commutation (38) est différente et notamment inférieure à la distance entre l'axe de rotation (71) de la tige de commutation (38) et le point d'accrochage entre la tige de commutation (38) et l'élément excentrique (100).

17. Commutateur électrique selon la revendication 16, caractérisé en ce que les deux points d'accrochage sont situés en vis-à-vis l'un de l'autre par rapport à l'axe de rotation (103) de l'élément excentrique (100).

18. Commutateur électrique selon la revendication 17, caractérisé en ce que, lorsque la poignée tournante (60) est dans une position de commutation, notamment dans une position médiane de commutation, les deux points d'accrochage sont situés dans un plan passant par les axes de rotation (71,103) de la poignée tournante (60) et de l'élément excentrique (100).

19. Commutateur électrique selon la revendication 12, caractérisé en ce que la tige de commutation (38) et le levier d'actionnement (30) possèdent des surfaces de support (87,88;89,90) pour une rotation de la tige de commutation (38) autour d'un axe longitudinal (71), les surfaces de support (87,88;89,90) étant en vis-à-vis l'une à l'autre uniquement pendant une partie du mouvement de rotation de la poignée tournante (60) d'une position de commutation dans une position de commutation voisine, et que pendant l'autre partie du mouvement de rotation de la poignée tournante (60), l'extrémité (69), qui engrène avec la poignée tournante (60), de la tige de commutation (38) peut être basculée latéralement.

20. Commutateur électrique selon la revendication 12, caractérisé en ce qu'au moins la première extrémité (69), proche de la poignée tournante (60), de la tige de commutation (38) peut pivoter autour d'un axe de rotation (118) qui est distant de l'axe de rotation (71) de la poignée tournante (60), et que la tige de commutation (38) peut être entraînée par la poignée tournante (60) et peut tourner autour de l'axe de rotation (118) de la première extrémité (69).

21. Commutateur électrique selon la revendication 20, caractérisé en ce que l'axe de rotation (118) de la première extrémité (69) de la tige de commutation (38) et le point d'accouplement entre la poignée tournante (60) et la tige de commutation (38) sont situés à l'opposé l'un de l'autre par rapport à un axe médian de la tige de commutation (38).

22. Commutateur électrique selon la revendication 20 ou 21, caractérisé en ce que la tige de commutation (38) possède, en vis-à-vis de l'axe de rotation (118) de la première extrémité (69), un logement pour un suiveur de came d'encliquetage et un ressort qui repousse le suiveur de came d'encliquetage contre une came d'encliquetage située sur le levier d'actionnement, le suiveur de came d'encliquetage étant guidé dans le logement de préférence radialement par rapport à l'axe de rotation de l'extrémité, voisine de la poignée tournante, de la tige de commutation.

23. Commutateur électrique selon l'une des revendications précédentes, caractérisé en ce que, dans au moins une position de commutation, la poignée tournante (60) est encliquetée au moyen d'une came d'encliquetage (84) et d'un suiveur de came d'encliquetage (85), avec une partie non tournante (34) du levier d'actionnement (30).

24. Commutateur électrique selon l'une des revendications précédentes, caractérisé en ce qu'un élément de commutation (48), qui est monté de manière à être mobile dans le boîtier (20) du commutateur et au moyen duquel le contact électrique (51,52) est déplaçable, peut être déplacé par l'intermédiaire de la tige de commutation (38), et que dans au moins une position de commutation, l'élément de commutation (48) est encliqueté avec le boîtier (20) du commutateur à l'aide d'une came d'encliquetage (57) et d'un suiveur de came d'encliquetage (58).

25. Commutateur électrique, notamment selon l'une des revendications précédentes, caractérisé en ce que la tige de commutation (38) comporte, sur son extrémité (39) éloignée de la poignée tournante (60), un doigt latéral (41), au moyen duquel le contact électrique (51,52) est déplaçable, que le doigt (41) est guidé en un emplacement déterminé dans une direction qui fait avec la direction longitudinale du levier d'actionnement (30), un angle différent de 90°.

26. Commutateur électrique selon la revendication 25, caractérisé en ce que la tige de commutation (38) est déplaçable dans sa direction longitudinale.

27. Commutateur électrique selon la revendication 25 ou 26, caractérisé en ce que le doigt (41) est guidé directement au-dessus de la surface extérieure de la tige de commutation (38).

28. Commutateur électrique selon la revendication 25, 26 ou 27, caractérisé en ce que le doigt (41) est guidé dans une partie bloquée en rotation (34) du levier d'actionnement (30).

29. Commutateur électrique selon la revendication 25, 26, 27 ou 28, caractérisé en ce que le levier d'actionnement (30) est monté de manière à pouvoir pivoter conjointement avec l'organe d'entraînement (23) autour d'un premier axe (24) dans le boîtier (20) du commutateur, que le levier d'actionnement (30) est monté de manière à pouvoir tourner sur l'organe d'entraînement (23) autour d'un second axe (33) qui recouvre de préférence perpendiculairement le premier axe (24), et que dans au moins une position de commutation de la poignée tournante (60), de préférence dans une position médiane de commutation, le doigt (41) est dirigé en direction du second axe (33).
